(19) Europäisches Patentamt / European Patent Office / Office européen des brevets

(11) **EP 3 121 672 B1**

(12) **EUROPÄISCHE PATENTSCHRIFT**

(45) Veröffentlichungstag und Bekanntmachung des Hinweises auf die Patenterteilung:
**24.04.2019 Patentblatt 2019/17**

(51) Int Cl.:
***G05B 23/02*** *(2006.01)*

(21) Anmeldenummer: **15177789.3**

(22) Anmeldetag: **22.07.2015**

(54) **DIAGNOSEEINRICHTUNG UND VERFAHREN ZUR ÜBERWACHUNG DES BETRIEBS EINES REGELKREISES**

DIAGNOSTIC DEVICE AND METHOD FOR MONITORING THE OPERATION OF A CLOSED LOOP

PROCEDE ET DISPOSITIF DE DIAGNOSTIC DESTINES A LA SURVEILLANCE DU FONCTIONNEMENT D'UN CIRCUIT REGULATEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**25.01.2017 Patentblatt 2017/04**

(73) Patentinhaber: **Siemens Aktiengesellschaft 80333 München (DE)**

(72) Erfinder:
• **Heiler, Patrick 68753 Waghäusel (DE)**
• **Pfeiffer, Bernd-Markus, Dr. 76744 Wörth (DE)**

(56) Entgegenhaltungen:
**EP-B1- 1 528 447**

• **KARRA S ET AL: "Comprehensive methodology for detection and diagnosis of oscillatory control loops", CONTROL ENGINEERING PRACTICE, PERGAMON PRESS, OXFORD, GB, Bd. 17, Nr. 8, 1. August 2009 (2009-08-01), Seiten 939-956, XP026148751, ISSN: 0967-0661, DOI: 10.1016/J.CONENGPRAC.2009.02.015 [gefunden am 2009-05-14]**
• **JELALI ET AL: "Estimation of valve stiction in control loops using separable least-squares and global search algorithms", JOURNAL OF PROCESS CONTROL, OXFORD, GB, Bd. 18, Nr. 7-8, 1. August 2008 (2008-08-01), Seiten 632-642, XP022705490, ISSN: 0959-1524, DOI: 10.1016/J.JPROCONT.2007.12.007 [gefunden am 2008-02-21]**

**Beschreibung**

Die Erfindung betrifft eine Diagnoseeinrichtung zur Überwachung des Betriebs eines Regelkreises mit einer Regelstrecke, die ein Ventil als Stellglied aufweist, nach dem Oberbegriff des Anspruchs 1 sowie ein entsprechendes Diagnoseverfahren nach dem Oberbegriff des Anspruchs 6.

Wartung und Instandhaltung von automatisierungstechnischen Anlagen können verbessert werden, wenn die korrekte Funktion von Teilanlagen oder Komponenten überwacht wird. Bei nachlassender Funktionsfähigkeit kann gezielt an der richtigen Stelle der Anlage mit Maßnahmen zur Wartung, Instandhaltung oder Fehlerbeseitigung eingegriffen werden. In einer Vielzahl von Regelkreisen verfahrenstechnischer Anlagen werden in Regelstrecken Ventile als Stellglieder verwendet. Die häufigste Ursache für Probleme und Störungen in solchen Regelkreisen ist eine erhöhte Reibung im Ventil, die durch Alterung der Dichtung, Anbackungen an Dichtung oder Ventilschaft oder durch zu fest angezogene Stopfbuchsendichtungen verursacht werden kann. Erhöhte Ventilreibung kann den betroffenen Regelkreis hinsichtlich seiner Genauigkeit und Regelgüte beeinträchtigen. Damit bei nachlassender Leistungsfähigkeit einzelner Regelkreise rechtzeitig und gezielt an der richtigen Stelle der Anlage mit Maßnahmen zur Instandhaltung oder Regleroptimierung eingegriffen werden kann, wäre es von Vorteil, wenn Regelkreise permanent und automatisch bezüglich ihrer Regelgüte überwacht würden.

Ein Diagnoseverfahren zur Überwachung des Betriebs eines Regelkreises ist bereits aus der EP 1 528 447 B1 bekannt. Im Falle eines im Wesentlichen stationären Zustands, d. h. bei weitgehend konstanter Sollwertvorgabe, wird die Varianz einer Folge von Istwert-Daten als stochastisches Merkmal bestimmt und für eine Analyse des Zustands des Regelkreises ausgewertet. Im Falle einer Anregung des Regelkreises entsprechend einem Sollwert-Sprung werden zur Analyse des Regelkreiszustands die relative Überschwingweite oder das Einschwingverhältnis, d. h. der Quotient aus Anstiegs- und Einschwingzeit der Regelgröße, als deterministische Merkmale ausgewertet.

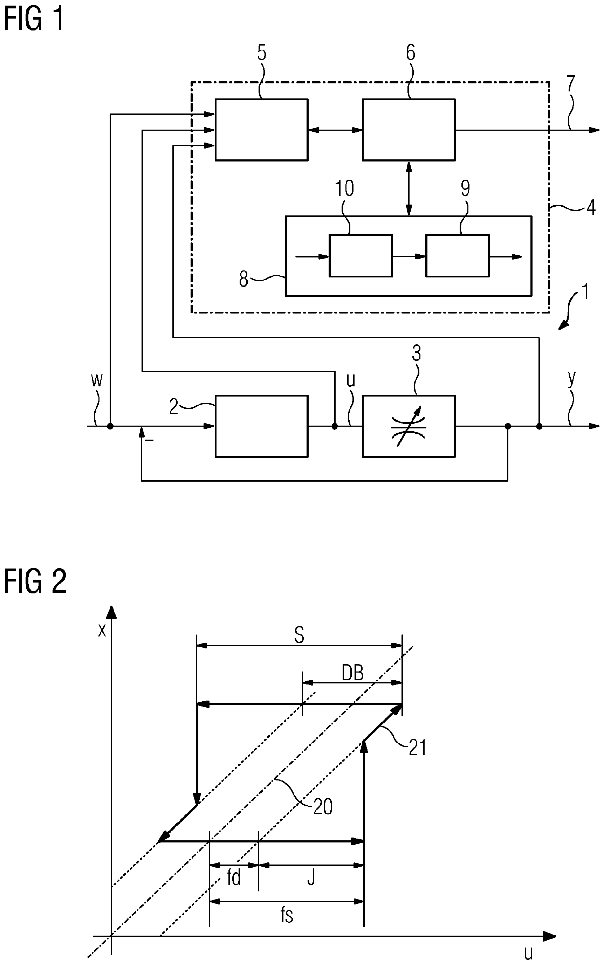

Aus dem Buch "Detection and Diagnosis of Stiction in Control Loops" von Jelali, M. und Huang, B., Springer-Verlag, London, 2010, ist bekannt, die Reibung von Ventilen, die als Stellglieder in Regelkreisen eingesetzt werden, zur Regelkreisüberwachung zu bewerten. Zur Verdeutlichung der dabei betrachteten Reibungseffekte ist in Figur 2 eine idealisierte Kennlinie in einem Diagramm dargestellt. Auf der Abszisse ist eine Stellgröße u aufgetragen, die von einem dem Ventil vorgeschaltetem Regler ausgegeben wird, auf der Ordinate der Istwert x der tatsächlichen Ventilstellung. Bei einem Ventil, welches frei von Reibungseffekten ist, würde der Istwert x entsprechend einer Kennlinie 20 exakt der Stellgröße u entsprechen. Die Kennlinie 20 ist daher als eine gerade Linie eingezeichnet. Liegt hingegen in einem Ventil erhöhte Haft- und/oder Gleitreibung vor, so wird sich die tatsächliche Ventilstellung x von der vom Regler ausgegebenen Stellgröße u unterscheiden. Dieses Verhalten wird anhand einer schematischen Kennlinie 21 verdeutlicht. Ein Parameter J bezeichnet die Höhe eines Sprungs (englisch "jump") nach dem Ausbrechen des Ventils aus der Haftreibung. Ein Parameter S kennzeichnet den Schlupf (englisch "slip") und entspricht der Summe der Breite eines Totbandes DB und der Sprunghöhe, des Parameters J. Zwei Parameter fd und fs bilden eine alternative Form zur Beschreibung des Reibungsverhaltens und können alternativ zu den bereits erläuterten Parametern S und J verwendet werden. Der Parameter fs bezeichnet dabei die normierte Summe aller Reibungseffekte und der Parameter fd die normierte bleibende coulombsche Reibung, wobei die bleibende Reibung sich auf die Gleitreibung bezieht und ggf. einen sanften Übergang zur Haftreibung besitzt. Die Breite des Totbandes DB resultiert aus der Stärke der Gleitreibung. Die Parameter S, J, fd und fs sind normierte Parameter, d. h. sie sind bezogen auf die Größe des Stellbereichs und können beispielsweise in Prozent des Stellbereichs angegeben werden. Der Parameter S gibt die nötige Änderung des Stellsignals u an, welche aufgebracht werden muss, damit sich das Ventil bei Richtungsumkehr bewegt. Zwischen den genannten Parametersätzen besteht der folgende Zusammenhang:

$$S = fs + fd$$

und

$$J = fs - fd.$$

Die Kennlinie 21 des Reibungsverhaltens beschreibt ein Parallelogramm. Die parallel zur Abszisse verlaufenden Abschnitte, bei welchen die Ventilstellung x trotz sich ändernder Stellgröße u unverändert bleibt, resultieren aus der Haftreibung. Sobald die Haftreibung überwunden ist, bricht das Ventil los und vollzieht einen Sprung entsprechend den parallel zur Ordinate verlaufenden Abschnitten. Im Vergleich zur Kennlinie 20 ohne Reibungseffekte liegt nach vollzogenem Sprung ein konstanter Schleppfehler vor. Dieser resultiert aus der Gleitreibung im Ventil. Liegt einer der beiden Effekte nicht vor, so ist die das Reibungsverhalten des Ventils beschreibende Kennlinie 21 dementsprechend verändert. Ebenso führt eine Verstärkung der Reibungseffekte zu einer entsprechenden Änderung des Verlaufs der Kennlinie 21. Die Abschätzung der o. g. Reibungsparameter ist auch dann hilfreich, wenn es keine Stellungsrückmeldung gibt, d. h. die Ventilstellung x nicht direkt messbar ist.

In der Literatur, beispielsweise dem oben genannten Buch, sind eine Vielzahl von Verfahren zur Erkennung von Haftreibung zu finden. Darin wird Haftreibung häufig als "Stiction" bezeichnet, einer Kurzform für die englischen Worte "static" und "friction". Verfahren zur Erkennung von Stiction liefern eine binäre Aussage über deren Vorhandensein, sind jedoch nicht immer zuverlässig. Je nach Randbedingungen ist das eine oder andere Verfahren eher in der Lage, eine Stiction zu erkennen. Es gibt jedoch keine konkreten Ratschläge, welches Verfahren für eine Regelkreisüberwachung zu bevorzugen ist.

In dem oben genannten Buch von Jelali und Huang werden folgende Verfahren zur Erkennung von Stiction beschrieben:

Methode a: verwendet typische Verläufe, z. B. Ventilstellung klemmt, während Stellgröße u steigt oder fällt.

Methode b: verwendet die Tatsache, dass sich im Scatterplot, einem Diagramm mit während eines Regelkreisbetriebs erfassten Verläufen der Wertepaare von Stellgröße u und Istwert x der Ventilstellung, ein Parallelogramm bildet.

Methode c: bestimmt die Form des Scatterplots der Stellungsrückmeldung über der Stellgröße u und versucht dabei typische Verläufe zu finden.

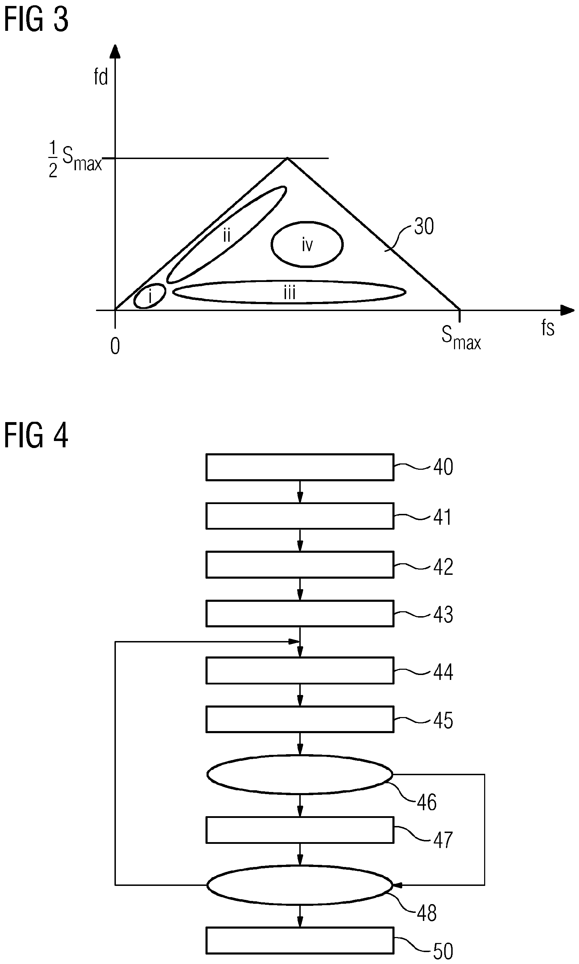

Methode der KKF: bestimmt, ob die KKF (Kreuzkorrelationsfunktion) zwischen Stellgröße u und Istwert x der Ventilstellung gerade oder ungerade ist.
Methode über die Kurvenform: vergleicht den Verlauf der Stellgröße u mit einem Sinus- und einem Dreiecksignal.
Bei der obigen Aufzählung sind die Bezeichnungen der einzelnen Verfahren aus dem oben genannten Buch übernommen und wurden lediglich ins Deutsche übersetzt.
Zur Schätzung der Stärke der Reibungseinflüsse sind in dem oben genannten Buch unter dem Stichwort "Stiction Estimation" zwei Verfahren mit ähnlicher Vorgehensweise zu finden, die beide allerdings einen sehr hohen Rechenaufwand erfordern. Beide Verfahren verwenden das bekannte Hammerstein-Modell, um das Ventilverhalten mathematisch durch ein Modell nachzubilden. Im Hammerstein-Modell wird das reibungsfreie dynamische Verhalten des Ventils durch ein lineares dynamisches Teilmodell repräsentiert. Ein diesem vorgeschaltetes nichtlineares Teilmodell soll ein nichtlineares Verhalten des Ventils, das im Wesentlichen auf den oben beschriebenen Reibungseffekten beruht, nachbilden. Die Parameter beider Teilmodelle, mit welchen die geringsten Abweichungen zwischen dem Verhalten des virtuellen Modells und des realen Ventils erreicht werden, sollen gemäß der Literatur in einem einzigen Verfahren geschätzt werden.
Dabei gilt es, zwei Optimierungsprobleme, ein nichtlineares und ein lineares, gleichzeitig zu lösen, welche zudem miteinander verkoppelt sind. Zur Identifikation des Hammerstein-Modells, d. h. zum Auffinden des bestmöglichen Parametersatzes, wird eine globale Suche nach optimalen Parametern des nichtlinearen Teils durchgeführt. Dabei wird mit Hilfe der Methode der kleinsten Fehlerquadrate, einer so genannten "Least-Squares"-Schätzung, für jeden Iterationsschritt der Suche das jeweils optimale lineare Teilmodell erneut identifiziert.
Um das nicht lineare Teilmodell zu bestimmen, muss zunächst ein für das Ventil geeigneter Modelltyp ausgewählt werden. Für eine möglichst realitätsnahe Abbildung des Ventilverhaltens wird He's Modell gemäß Figur 3.1 des oben genannten Buchs von Jelali und Huang ausgewählt. Es handelt sich dabei um ein Optimierungsproblem mit den beiden Parametern fs und fd. Um die Suche nach den Parametern mit bestmöglicher Übereinstimmung von Hammerstein-Modell und realem Ventil einzuschränken, können anhand der Messdaten und physikalischer Überlegungen folgende Grenzen für die Parameter fs und fd definiert werden:

fs ≥ 0, fd ≥ 0: beide Parameter müssen größer oder mindestens gleich 0 sein, da negative Werte physikalisch keinen Sinn ergeben.

fs + fd < Smax: eine Obergrenze Smax des Parameters S kann aus den Messdaten bestimmt werden als Differenz des maximalen und minimalen Werts der Stellgröße u. Größer als dieser Wert kann auch das Totband DB nicht sein.

fd ≤ fs: aus physikalischen Gründen ist der Parameter S größer oder mindestens gleich dem Parameter J, da der Parameter J einen Anteil des Parameters S bildet.

Aus diesen Grenzen ergibt sich ein dreieckiger Suchraum 30 gemäß dem Diagramm in Figur 3 für die Suche nach optimalen Parametern fs, aufgetragen auf der Abszisse, und fd, aufgetragen auf der Ordinate. Bereiche i, ii, iii und iv charakterisieren verschiedene Zustände des Ventils bezüglich der vorherrschenden Reibung:

Bereich i: es herrscht geringe Reibung, das Ventil ist gut beweglich,
Bereich ii: ein vergleichsweise großes Totband DB und überwiegende Gleitreibung,
Bereich iii: ein sogenanntes Stick-Slip-Verhalten mit überwiegender Haftreibung,
Bereich iv: ein breites Totband DB bei gleichzeitigem Stick-Slip-Verhalten.

Ergebnisse der Modellidentifikation in allen Bereichen außerhalb des Bereichs i können als Anzeichen für vorliegende Stiction bewertet werden, die sich negativ auf das Regelkreisverhalten auswirken kann.

Im oben genannten Buch von Jelali und Huang werden zur Durchführung der Modellidentifikation, bei welcher bestmögliche Parameter des Hammerstein-Modells gesucht werden, eine zufällige Suche, häufig als "Random Search" bezeichnet, oder genetische Algorithmen vorgeschlagen, die in nachteiliger Weise eine sehr hohe Zahl von Iterationsschritten benötigen. Eine praktische Umsetzung der dort genannten Verfahren kann zudem zu mehreren Problemen führen:
Bei einer zeitdiskreten Least-Squares-Schätzung kann es zu verschiedenen numerischen Problemen kommen, z. B. im Zusammenhang mit Messrauschen oder der Wahl der Abtastzeit, welche ein Schätzen der optimalen Parameter erschweren.

Bezüglich der Streckendynamik sind keinerlei Vorkenntnisse vorhanden und es erfolgt keine Auswahl eines geeigneten, zeitdiskreten Modelltyps.

Der Erfindung liegt die Aufgabe zugrunde, eine Diagnoseeinrichtung sowie ein Diagnoseverfahren zu finden, welches geringere Anforderungen an die Recheneinheit einer Recheneinheit stellen und dennoch zuverlässige Schätzwerte für die in einem Ventil vorherrschende Reibung liefern.

Zur Lösung dieser Aufgabe weist die neue Diagnoseeinrichtung der eingangs genannten Art die im kennzeichnenden Teil des Anspruchs 1 angegebenen Merkmale auf. In den abhängigen Ansprüchen sind Weiterbildungen der Erfindung, in Anspruch 6 ein Diagnoseverfahren, in Anspruch 7 ein Computerprogramm zur Durchführung des Diagnoseverfahrens und in Anspruch 8 ein entsprechendes Computerprogrammprodukt beschrieben.

Die Erfindung hat den Vorteil, dass im Zuge einer datenbasierten Regelkreisüberwachung anhand von Messungen von Regler-Stellgröße, die meist einer Vorgabe einer Ventilstellung entspricht, sowie Regler-Istwert eine quantitative Einschätzung der Reibung in einem Ventil ermöglicht wird. Dabei kann es sich um einen Regelkreis für beispielsweise Durchfluss oder Druck handeln und eine Messung der tatsächlichen Ventilstellung, d. h. eine sog. Stellungsrückmeldung, wird hierfür nicht vorausgesetzt. Wegen des vergleichsweise geringen Rechenaufwands kann die Analyse im laufenden Anlagenbetrieb durchgeführt werden und hat somit keinen Einfluss auf die Produktion. Eine quantitative Bewertung der Reibung ist hilfreich, um die Regelgüte des betreffenden Regelkreises durch Instandhaltungsmaßnahmen am Ventil bei festgestelltem Bedarf zu verbessern und so die Produktivität und Effizienz der Anlage zu steigern. Dabei werden vorteilhaft im Sinne einer nicht invasiven Diagnose nur die im regulären Prozessbetrieb anfallenden Daten verwendet. Ein auf einer automatisierungstechnischen Anlage ablaufender Prozess wird durch die Diagnose nicht beeinflusst und kann bei Durchführung einer Diagnose ungestört weiterlaufen.

In vorteilhafter Weise wird das Problem der Schätzung eines Hammerstein-Modells für eine Regelstrecke mit einem Ventil in zwei leichter lösbare Teilprobleme aufgeteilt:

a) Schätzung des linearen dynamischen Teilmodells anhand eines Sollwertsprungs als Anregungsfunktion, bei welchem die Reibungseinflüsse vernachlässigbar sind.
b) Schätzung eines nichtlinearen Teilmodells anhand eines Zeitbereichs mit konstantem Sollwert, bei welchem die Reibungseinflüsse das Ventilverhalten und damit das Verhalten der Gesamt-Regelstrecke, bestehend aus Ventil und nachgelagerter Strömungsmechanik, z. B. Wirkung der Ventilstellung auf einen Durchfluss, dominieren.

Durch diese Aufteilung wird die Schätzung des Hammerstein-Modells aus realen Daten auch mit vergleichsweise geringer Rechenleistung praktisch anwendbar und liefert eine zur Beurteilung der Reibungseinflüsse ausreichende Genauigkeit der geschätzten Parameter.

In einer besonders vorteilhaften Ausgestaltung der Diagnose werden zur Identifikation des linearen Teilmodells Parameter eines Verzögerungsglieds erster Ordnung als lineares Teilmodell geschätzt. Durch die direkte Schätzung eines zeitkontinuierlichen Modells niedriger Ordnung für das lineare Teilmodell anstelle zeitdiskreter Modelle höherer Ordnung werden Probleme bei der Festlegung der Modellabtastzeit vermieden und die Zahl der zu schätzenden Parameter reduziert, sodass sich insgesamt die numerische Stabilität der Schätzung verbessert.

Entsprechend einer weiteren besonders vorteilhaften Weiterbildung der Erfindung wird eine quantitative Bestimmung der Ventilreibung durch Identifikation des nichtlinearen Teilmodells nicht ständig durchgeführt sondern angestoßen, wenn ein zuvor durchgeführtes, bezüglich des Rechenaufwands einfaches Erkennungsverfahren eine erhöhte Haftreibung ergab. Somit wird in vorteilhafter Weise nur bei Bedarf die vergleichsweise aufwändige Schätzung des nichtlinearen Teilmodells für das Reibungsverhalten des Ventils durchgeführt. Es werden also zunächst mit Hilfe der einfachen binären Erkennungsverfahren, die beispielsweise aus dem oben genannten Buch von Jelali und Huang bekannt sind, diejenigen Regelkreise gesucht, bei denen ein Verdacht auf Stiction besteht. Nur wenn mindestens eines der insgesamt fünf einfachen Erkennungsverfahren einen Verdacht nahelegt, wird die rechenzeitintensivere Schätzung des nichtlinearen Teilmodells gestartet, das über die bei der Identifikation des Teilmodells erhaltenen Parameter eine Aussage über die Stärke der Reibungseinflüsse ermöglicht.

Ein Verfahren mit zufälliger Suche (Random Search) über den gesamten Suchraum und alternativ dazu eine Methode einer feinen Untergliederung des Suchraums (Sectioning) würden zum Finden des globalen Minimums der Abweichungen zwischen Modell und realem Ventil eine vergleichsweise hohe Anzahl an Durchläufen benötigen und wären mit entsprechend hohem Rechenaufwand verbunden. Zur Verringerung des Rechenaufwands wird daher bei einer weiteren besonders vorteilhaften Ausgestaltung der Erfindung ein Suchraum, der durch zwei Parameter des nichtlinearen Teilmodells, beispielsweise die Parameter fd und fs oder die Parameter S und J, aufgespannt ist, in eine Vielzahl aneinandergrenzender Teilräume unterteilt. In den dabei gebildeten Teilräumen kann jeweils beispielsweise mittels einer zufälligen Suche dasjenige Parameterpaar bestimmt werden, welches in dem jeweiligen Teilraum die beste Übereinstimmung zwischen nichtlinearem Teilmodell und realem Ventil ergibt. Anhand der Vielzahl von Parameterpaaren, die jeweils in den Teilräumen erhalten wurden, kann nun mit vergleichsweise geringem Rechenaufwand das Parameterpaar mit der besten Güte im gesamten Suchraum ermittelt werden.

Die Diagnoseeinrichtung kann auf dieselbe Weise wie die bereits aus der EP 1 528 447 B1 bekannte Diagnoseeinrichtung vorteilhaft als Software-Funktionsbaustein ausgebildet werden, der in einer graphischen Bedienoberfläche eines Engineering-Systems mit Funktionsbausteinen des Regelkreises verschaltbar und zum Betrieb der Diagnoseeinrichtung in ein Automatisierungsgerät ladbar ist. Auf einem sogenannten Faceplate zur Realisierung einer Mensch-Maschine-Schnittstelle auf einem Bedien- und Beobachtungsgerät der automatisierungstechnischen Anlage werden dann die berechneten Parameter, beispielsweise die Parameter S und J oder die Parameter fs und fd, zur Anzeige gebracht. Auf diesem Bedien- und Beobachtungssystem können durch einen Bediener, falls gewünscht, eine Änderung der Parametrierung, beispielsweise der Gitterweite bei der Unterteilung des Suchraums, eine Eingabe von Referenzwerten zur Alarmerzeugung bei unzulässig starker Reibung usw. vorgenommen werden.

In besonders vorteilhafter Weise kann die neue Diagnoseeinrichtung zur Überwachung des Betriebs eines Regelkreises in einer Software-Umgebung zur Cloud-basierten Regelkreisüberwachung implementiert werden. Eine derartige Software-Umgebung stellt beispielsweise der datenbasierte Remote Service "Control Performance Analytics" der Siemens AG dar. Daten aus Kundenanlagen werden mit Hilfe von Software-Agenten gesammelt, aggregiert und an ein Siemens Service Operation Center geschickt, in welchem sie auf einem Remote Service-Rechner abgespeichert werden. Dort werden sie mit Hilfe von verschiedenen "Data Analytics" Software-Applikationen halbautomatisch ausgewertet. Bei Bedarf können für den Remote Service besonders geschulte Experten auf dieser Datenbasis hocheffizient arbeiten. Die Ergebnisse der Datenanalyse können auf einem Monitor des Remote Service-Rechners angezeigt und/oder auf einem Sharepoint bereitgestellt werden, sodass sie vom Endkunden, d. h. dem Bediener der automatisierungstechnischen Anlage, zum Beispiel in einem Browser betrachtet werden können.

Das Diagnoseverfahren wird somit bevorzugt in Software oder in einer Kombination Soft-/Hardware implementiert, sodass die Erfindung auch ein Computerprogramm mit durch einen Computer ausführbaren Programmcodeanweisungen zur Implementierung des Diagnoseverfahrens betrifft. In diesem Zusammenhang betrifft die Erfindung auch ein Computerprogrammprodukt, insbesondere einen Datenträger oder ein Speichermedium, mit einem durch einen Computer ausführbaren derartigen Computerprogramm. Ein solches Computerprogramm kann, wie oben beschrieben, in einem Speicher eines Automatisierungsgeräts vorgehalten oder in diesen geladen werden, sodass beim Betrieb des Automatisierungsgeräts die Überwachung des Betriebs eines Regelkreises automatisch durchgeführt wird, oder das Computerprogramm kann bei einer Cloud-basierten Überwachung von Regelkreisen in einem Speicher eines Remote Service-Rechners vorgehalten oder in diesen ladbar sein.

Anhand der Zeichnungen, in denen ein Ausführungsbeispiel der Erfindung dargestellt ist, werden im Folgenden die Erfindung sowie Ausgestaltungen und Vorteile näher erläutert.

Es zeigen:

Figur 1   ein Blockschaltbild eines Regelkreises mit Diagnoseeinrichtung,

Figur 2   ein Diagramm zur Erläuterung des Reibungsverhaltens eines Ventils,

Figur 3   einen Suchraum für die Parametersuche eines nicht linearen Teilmodells und

Figur 4   ein Ablaufdiagramm einer quantitativen Reibungsschätzung,

Figur 5   bei Messungen an einem Durchflussregelkreis erhaltene Folgen von Istwert- und Stellwertdaten und

Figur 6   ein Diagramm zum Vergleich der Istwertdaten einer realen Regelstrecke mit den durch ein geschätztes Hammerstein-Modell erzeugten, simulierten Istwertdaten.

In den Figuren sind gleiche Teile mit gleichen Bezugszeichen versehen.

Gemäß Figur 1 besteht ein zu überwachender Regelkreis 1 aus einem Regler 2 und einem Prozess 3, der häufig auch als Regelstrecke bezeichnet wird und ein Ventil als Stellglied aufweist. Bei dem Regelkreis 1 kann es sich beispielsweise um eine Durchflussregelung handeln. In diesem Fall wird als Sollwert w ein Wert eines Durchflusses vorgegeben, der mittels des Ventils eingestellt werden soll. Am Ausgang des Prozesses 3 wird ein Istwert y erfasst und zur Bildung einer Regeldifferenz zurückgeführt. Der Regler 2 berechnet anhand der Regeldifferenz einen Stellwert u zur Einstellung des Durchflusses am Prozess 3. Bei dem Stellwert u kann es sich beispielsweise unmittelbar um die Vorgabe einer gewünschten Ventilstellung handeln.

Handelt es sich abweichend vom gezeigten Ausführungsbeispiel beim Regelkreis um eine Stellungsregelung, entspricht der Sollwert einer Stellungsvorgabe und der Istwert unmittelbar der Stellung des im Prozess verwendeten Ventils.

Durch eine Diagnoseeinrichtung 4 wird der Betrieb des Regelkreises 1 und evtl. weiterer, in Figur 1 der Übersichtlichkeit wegen nicht dargestellter Regelkreise einer automatisierungstechnischen Anlage auf Störungen überwacht. Derartige Störungen können insbesondere durch erhöhte Reibung in dem Ventil, welches im Prozess 3 verwendet wird, verursacht sein. Zur Überwachung des Betriebs des Regelkreises 1 werden zeitliche Folgen von Daten des Sollwerts w, des Stellwerts u und des Istwerts x in einem Datenspeicher 5 hinterlegt. Auf der Basis dieser Daten werden durch eine Auswerteeinrichtung 6 Parameter 7 eines Modells 8 berechnet und ausgegeben, welche charakteristisch für den Zustand des Ventils und somit für den Betrieb des Regelkreises sind. Bei dem Modell 8 handelt es sich um ein Hammerstein-Modell, welches, wie bereits eingangs erläutert, ein lineares Teilmodell 9 für das dynamische Verhalten des Prozesses 3 und ein diesem vorgeschaltetes nichtlineares Teilmodell 10 für das nichtlineare Verhalten des Prozesses 3 umfasst, welches wesentlich durch das Reibungsverhalten des Ventils bestimmt wird. Bei der durch die Auswerteeinrichtung 6 ausgeführten Identifikation der Teilmodelle 9 und 10 werden die Modellparameter berechnet, mit welchen das virtuelle Modell 8 den realen Prozess 3, der ein reales Ventil als Stellglied aufweist, bestmöglich nachbildet. Von besonderem Interesse sind beispielsweise die eingangs anhand Figur 2 näher erläuterten Parameter fs und fd zur Charakterisierung der im Ventil herrschenden Reibung. In Kenntnis der Reibung kann dann in vorteilhafter Weise eine Aussage getroffen werden, ob die Reibung ein Ausmaß erreicht hat, das sich im Regelkreis 1 störend bemerkbar macht, oder es kann beurteilt werden, wie groß die Wirkung der Reibung auf das Regelkreisverhalten wirklich ist.

Damit die Diagnose in Echtzeit, d. h. gleichzeitig mit dem Regelkreisbetrieb, ablaufen kann und damit der Rechenleistungsbedarf gering ist, werden mit der Diagnoseeinrichtung, die zur Überwachung auch weiterer, in Figur 1 nicht dargestellter Regelkreise ausgelegt sein kann, zunächst mit einfachen, binären Erkennungsverfahren diejenigen Regelkreise einer automatisierungstechnischen Anlage gesucht, bei denen ein Verdacht auf Stiction besteht. Wenn mindestens eines der einfachen, beispielsweise aus dem Buch von Jelali und Huang bekannten Erkennungsverfahren diesen Verdacht nahelegt, wird die im Vergleich zu den einfachen Erkennungsverfahren rechenzeitintensive Schätzung von Parametern des nichtlinearen Teilmodells 10 gestartet, um eine Aussage über die Stärke der Reibung zu erhalten. Die Schätzung der Parameter des nichtlinearen Teilmodells 10 wird insbesondere dadurch entscheidend vereinfacht, dass zunächst das lineare dynamische Teilmodell 9 durch Schätzung seiner Parameter bei einem Sollwertsprung und dass anschließend das nicht lineare Teilmodell 10 in Kenntnis eines realitätsnahen linearen Teilmodells 9 mit Daten bei im Wesentlichen konstantem Sollwert w identifiziert wird. Dadurch lässt sich bei vergleichsweise geringer Berechnungszeit eine hohe Genauigkeit des Schätzergebnisses erreichen. Da die Parameter des nichtlinearen Teilmodells 10 mit einem Datenausschnitt mit konstantem Sollwert w geschätzt werden, werden Daten verwendet, an welchen die Auswirkungen der Reibung besonders deutlich sichtbar sind. Durch Simulationen und reale Messungen an fehlerhaften Ventilen wurde nämlich erkannt, dass die erhöhte Reibung nur wenig Einfluss auf das Verhalten des Regelkreises 1 bei einem Sollwertsprung zeigt, da hierbei die Kraft zur Ansteuerung des Ventils dessen Haftreibung meist weit übersteigt. Aus demselben Grund kann das lineare Teilmodell 10 bei Auswertung der Daten eines Sollwertsprungs ausreichend genau und im Wesentlichen reibungsunabhängig geschätzt werden. Die Identifikation des linearen Teilmodells 9 kann dabei vorteilhaft mit Funktionen der linearen Modellidentifikation unabhängig von den Parametern des nichtlinearen Teilmodells stattfinden. Vorteilhaft geeignet ist dazu die direkte Schätzung zeitkontinuierlicher Modelle niederer Ordnung mit einem direkten lokalen Optimierungsverfahren. Das zur Identifikation des nicht linearen Teilmodells 10 zu lösende Optimierungsproblem ist stark nicht linear und eine dabei angewandte Gütefunktion hat über einem Suchraum, beispielsweise dem in Figur 3 gezeigten dreieckigen Suchraum 30, eine Vielzahl lokaler Extrema. Um den Rechenaufwand der Suche zu reduzieren, werden das bekannte Verfahren der zufälligen Suche (Random Search) sowie das Verfahren der Untergliederung des Suchraums (Sectioning) zum Finden des globalen Minimums miteinander kombiniert. Dabei wird zunächst ein Gitter aus quadratischen Elementen über den in Figur 3 gezeigten dreieckigen Suchraum 30 gelegt. Anschließend wird für jeden Gitterpunkt eine zufällige Suche in einem kleinen quadratischen Gebiet und mit wenigen Iterationen durchgeführt. Die Kantenlänge der jeweiligen Suchbereiche richtet sich dabei nach dem Abstand der Gitterpunkte. Auf diese Weise wird der gesamte Suchraum 30 zur Lösung des Optimierungsproblems abgedeckt. Meist kann die zufällige Suche in einem kleinen Suchraum, d. h. in einem quadratischen Element des Gitters, schon nach wenigen Schritten ein Optimum finden. Die beschriebene Kombination von Sectioning und Random Search führt zu einer Aufwandsersparnis von etwa 30 %.

Für eine Durchführung der zufälligen Suche kann beispielsweise eine der folgenden Möglichkeiten zur Anwendung kommen: Zum einen kann der neue Punkt, um welchen herum gesucht wird, stets durch einen gefundenen besseren ersetzt werden, wodurch der Suchraum, in welchem die neuen Punkte gesucht werden, permanent wandert.

Zum anderen besteht die Möglichkeit, den Suchraum für die zufällige Suche immer konstant zu halten und die neuen Punkte lediglich abzuspeichern.

Es hat sich herausgestellt, dass bei dem vorliegenden Optimierungsproblem die zweite Variante effektiver ist, da durch eine Verschiebung der einzelnen kleinen Suchräume im Gitter Überlappungen entstehen könnten und somit einige Punkte mehrfach ausgewertet werden würden.

Das globale Optimum über den gesamten Suchraum ist schließlich der Punkt mit der besten Gütefunktion der in den einzelnen Teilräumen, d. h. den oben beschriebenen quadratischen Elementen des Gitters, gefundenen lokalen Optima.

Bei der Schätzung der Parameter des Hammerstein-Modells wird der quadratische Modellfehler V berechnet nach der Formel:

$$V = \sum_{i=1}^{N} (y_{sim} - y)^2$$

mit

N Anzahl der Messwerte,

$y_{sim}$ Istwert aus der Simulation und y Istwert am realen Prozess 3.

Um den virtuell durch das Hammerstein-Modell 8 erzeugten Istwert $y_{sim}$ zu erhalten, wird zunächst mit dem nichtlinearen Teilmodell 10 das Reibungsverhalten der Regelstecke 3 incl. Ventil simuliert. Anschließend kann das Ergebnis verwendet werden, um mit dem linearen Teilmodell 9 den simulierten Istwert $y_{sim}$ zu erzeugen.

Weil der stationäre Zustand des Regelkreises 1 nicht bekannt ist, sollte ein gewisser Einschwingvorgang akzeptiert werden. Um den Effekt des Einschwingens aus der Berechnung der Gütefunktion auszuschließen, werden nach einem Sollwertsprung eine vorgegebene Anzahl von Daten am Anfang des jeweils betrachteten Datenausschnitts, beispielsweise 10 % der Daten, ignoriert. Mit den hinteren 90 % der Daten wird ein Maß Fit für die Modellgüte als Gütefunktion berechnet nach der Formel:

$$Fit = 100 * \frac{1 - \|y_{sim} - y\|}{\|y - \mu_y\|}$$

Figur 4 zeigt in einem Ablaufdiagramm ein Verfahren, welches zur Überwachung des Betriebs des Regelkreises 1 (Figur 1) mit einer Regelstrecke 3, die ein Ventil als Stellglied aufweist, und zur quantitativen Bewertung der Reibung des Ventils angewendet werden kann. In einem Schritt 40 wird, sofern dies noch nicht aus anderen Gründen im Rahmen einer Regelkreisanalyse geschehen ist, das lineare Teilmodell 9 für das dynamische Verhalten des Prozesses 3 geschätzt, welches beispielsweise die Struktur eines Verzögerungsglieds erster Ordnung besitzt und im Hammerstein-Modell 8 eingesetzt wird. Dazu wird ein Datensatz verwendet, der im Wesentlichen zeitgleich mit einem Sollwertsprung aufgezeichnet ist, also Ausschnitte der Folgen von Daten des Stellwerts u und des Istwerts y für einen Zeitraum mit einem im Wesentlichen sprungförmigen Verlauf des Sollwerts w. In einem Schritt 41 wird ein zweiter Datensatz, ein möglichst langer Bereich mit konstantem Sollwert w, ermittelt und die Istwertdaten werden von ihrem Mittelwert bereinigt. Durch einfache Analyse wird aus dem erhaltenen Datensatz ein Maximalwert $S_{max}$ des Parameters S bestimmt, welcher zur Festlegung des dreieckigen Suchraums 30 (Figur 3) dient. In einem Schritt 42 werden die Startwerte der zufälligen Suche, beispielsweise 1000 Stück, gleichmäßig im Suchraum 30 verteilt. Eine Optimierungsschleife, in welche nach dem Schritt 43 eingetreten wird, dient zur Bestimmung der optimalen Parameter für jeden im Schritt 42 definierten Teilraum des Suchraums 30 und wird für jeden der Startwerte durchlaufen. Dabei wird in einem kleinen, festen Suchradius eine zufällige Suche durchgeführt. Bei der in einem Schritt 44 vorgenommenen Platzierung der neuen Punkte werden stets die oben genannten Grenzen der Parameter eingehalten. Mit den dem jeweiligen Punkt entsprechenden Parametern und Ausschnitten der Folgen von Daten des Stellwerts u und des Istwerts y für einen Zeitraum mit im Wesentlichen konstantem Sollwert w werden Ausgangswerte des Hammerstein-Modells 8 des Prozesses 3 errechnet und so simulierte Istwerte $y_{sim}$ erzeugt, welche zur Berechnung der jeweiligen Modellgüte genutzt wird. Nach einer Abfrage 46 wird, falls eine Verbesserung erreicht wurde, in einem Schritt 47 der neue Punkt als lokales Minimum abgespeichert. Wurde in einer Abfrage 48 ein Abbruchkriterium für das Durchlaufen der Schleife noch nicht erfüllt, wird die Schleife beginnend mit dem Schritt 44 erneut durchlaufen. Nachdem die bisher beschriebenen Berechnungen für alle Teilräume durchgeführt wurden, liegen sämtliche lokale Optima vor. Aus dem besten Punkt aller Teilräume, d. h. dem globalen Optimum, werden die optimalen Parameter fs und fd des nicht linearen Teilmodells 10 berechnet. Zudem können, wie oben erläutert, die Parameter S und J bestimmt werden. Vorteilhaft können die Parameter S und J in Prozent des Stellbereichs angegeben werden, sodass beispielsweise ein Wert des Parameters S von 4 % bedeutet, dass der Regler 2 die Stellgröße u um 4 % ändern muss, bevor das Ventil im Prozess 3 reagiert. In einem letzten Schritt 50 wird das oben beschriebene Maß Fit für die Güte des Hammerstein-Modells 8 berechnet.

Die Überwachung von Regelkreisen im Hinblick auf Ventilreibung wird somit vorteilhaft in zwei leichter lösbare Aufgaben aufgeteilt:

a) Ermittlung der verdächtigen Regelkreise aus einer großen Anzahl von Kandidaten anhand von einfachen Erkennungsverfahren, die nur eine binäre Aussage zum Verdacht auf Stiction liefern.

b) Quantifizierung der vorhandenen Reibung zur Ermöglichung einer Beurteilung ihres Einflusses auf das Regelkreisverhalten durch die Parameterschätzung für ein nichtlineares Teilmodell, welches das Reibungsverhalten beschreibt.

Durch diese Aufteilung müssen die rechenzeitintensiven Berechnungen der Modellidentifikation nur für eine begrenzte Anzahl von Regelkreisen durchgeführt werden, bei denen zuvor schon ein konkreter Anfangsverdacht festgestellt wurde.

Aus den gewonnenen Parametern fd und fs oder S und J zur Bewertung der Ventilreibung kann der Anlagenbetreiber eine sinnvolle und zielgerichtete Planung von Instandhaltungsmaßnahmen ableiten, um die Regelgüte ggf. zu verbessern und die Effizienz der Anlage zu steigern.

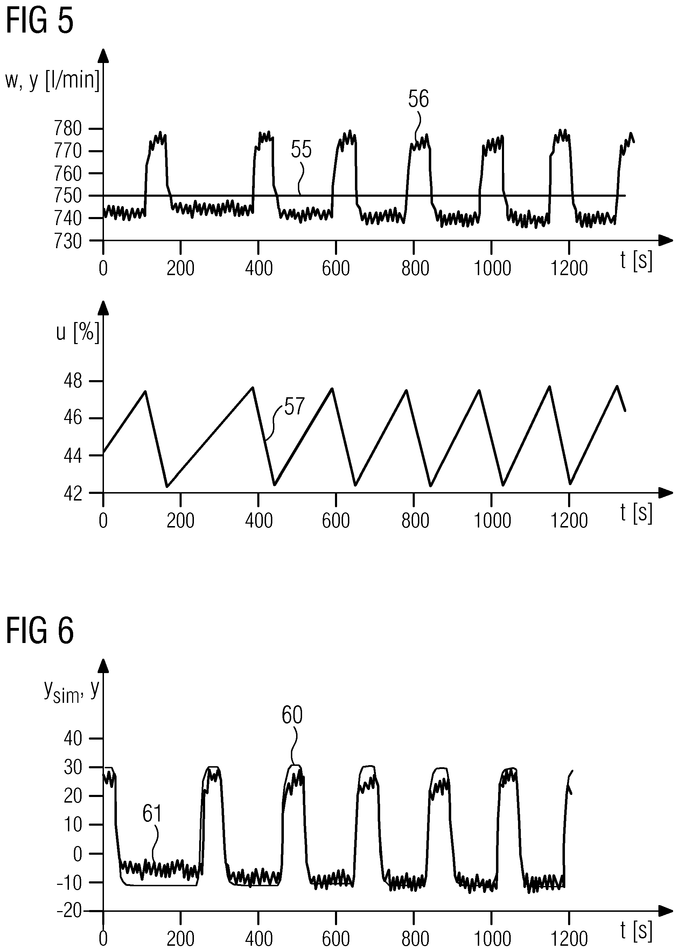

Die Auswirkungen erhöhter Reibung auf das Regelkreisverhalten werden im Folgenden anhand der Figuren 5 und 6, die an einem realen Durchflussregelkreis aufgenommene Daten enthalten, deutlich sichtbar. Im oberen Diagramm der Figur 5 sind ein Verlauf 55 des Sollwerts w und ein Verlauf 56 des Istwerts y, im unteren Diagramm der Figur 5 ein Verlauf 57 der Stellgröße u eingezeichnet. An der Abszisse ist jeweils die Zeit t in Sekunden, an der Ordinate des oberen Diagramms der Durchfluss in Liter pro Minute und an der Ordinate des unteren Diagramms die Prozentangabe der Stellgröße u aufgetragen. Bei konstanter Sollwertvorgabe entsprechend dem Verlauf 55 kann in dem Regelkreis der für Stiction typische, sägezahnförmige Verlauf 57 der Stellgröße u sowie der etwa rechteckförmige Verlauf 56 des Istwerts y festgestellt werden.

Da bei diesem konkreten Beispiel drei der fünf einfachen, zunächst angewandten Erkennungsverfahren einen Verdacht auf Stiction nahelegen, wurde die Identifikation eines Hammerstein-Modells als sinnvoll erachtet. Um die Parameter des Modells zu schätzen, wurde zunächst an einem Sollwertsprung ein lineares Teilmodell identifiziert, im vorliegenden Fall ein PT1-Glied mit den Parametern k = 7,2 und t = 15,8 s. Eine anschließende Identifikation des nichtlinearen Teilmodells lieferte die Parameter J = 3,1 und S = 4,2 als Modellparameter mit der besten Übereinstimmung zwischen Hammerstein-Modell und realem Prozess. In Figur 6 sind zur Veranschaulichung des Ergebnisses Verläufe 60 und 61 des simulierten Istwerts $y_{sim}$ bzw. des Istwerts y des realen Prozesses eingezeichnet. Das Überwachungsverfahren bestätigt den aufgrund der einfachen Erkennungsverfahren erhaltenen Verdacht, dass es sich tatsächlich um Stiction handelt. Die ermittelten Werte für die Parameter J und S sind in einem für Stiction typischen Bereich. Die Stellgröße u muss sich entsprechend dem Parameter S um mehr als 4 % ändern, bis sich das Ventil zur Veränderung des Durchflusses überhaupt bewegt. Ursache ist beispielsweise eine unzulässig hohe Haftreibung in einer Stopfbuchsendichtung, die durch entsprechende Wartungsmaßnahmen beim nächsten Wartungszyklus behoben werden kann.

**Patentansprüche**

1. Diagnoseeinrichtung zur Überwachung des Betriebs eines Regelkreises (1) mit einer Regelstrecke (3), die ein Ventil als Stellglied aufweist, mit einem Datenspeicher (5), in welchem jeweils eine Folge von Sollwert (w)-, Stellwert (u)- und Istwert (y)-Daten des Regelkreises (1) abspeicherbar ist, mit einer Auswerteeinrichtung (6) zur Auswahl von zumindest ersten Ausschnitten der Folgen für einen Zeitraum mit einem im Wesentlichen sprungförmigen Verlauf des Sollwerts (w) sowie zweiten Ausschnitten der Folgen für einen Zeitraum mit im Wesentlichen konstantem Sollwert (w), **dadurch gekennzeichnet, dass** die Auswerteeinrichtung (6) dazu ausgebildet ist, anhand der ersten Ausschnitte ein lineares Teilmodell (9) für das dynamische Verhalten der Regelstrecke (3), die ein Ventil aufweist, zu identifizieren, und wobei die Auswerteeinrichtung (6) weiterhin dazu ausgebildet ist, anhand der zweiten Ausschnitte und des linearen Teilmodells (9) ein nichtlineares Teilmodell (10) für das Reibungsverhalten der Regelstrecke (3) zu identifizieren, wobei das nichtlineare Teilmodell (10) dem zuvor identifizierten linearen Teilmodell (9) vorgeschaltet ist und, anhand einer Auswertung der Folgen zu ermitteln, ob ein Verdacht auf eine erhöhte Haftreibung des Ventils vorliegt, und bei vorliegendem Verdacht auf erhöhte Haftreibung deren quantitative Bestimmung durch Identifikation des nicht linearen Teilmodells (10) durchzuführen.

2. Diagnoseeinrichtung nach Anspruch 1, **dadurch gekennzeichnet, dass** die Auswerteeinrichtung (6) dazu ausgebildet ist, zur Identifikation des linearen Teilmodells (9) Parameter eines Verzögerungsglieds erster Ordnung als lineares Teilmodell zu schätzen.

3. Diagnoseeinrichtung nach einem der vorhergehenden Ansprüche, **dadurch gekennzeichnet, dass** die Auswerteeinrichtung (6) dazu ausgebildet ist, zur Identifikation des nichtlinearen Teilmodells (10) einen Suchraum (30), der durch zwei Parameter (fd, fs) des nichtlinearen Teilmodells (10) aufgespannt ist, in eine Vielzahl aneinandergrenzender Teilräume zu unterteilen, in den gebildeten Teilräumen jeweils das Parameterpaar mit der jeweils besten Güte des nichtlinearen Teilmodells (10) zu bestimmen und anhand der in den Teilräumen bestimmten Parameterpaare das Parameterpaar mit der besten Güte im Suchraum (30) zu ermitteln.

4. Diagnoseeinrichtung nach einem der vorhergehenden Ansprüche, **dadurch gekennzeichnet, dass** zumindest der Datenspeicher (5) und die Auswerteeinrichtung (6) durch Software auf einem Remote Service-Rechner zur Ferndiagnose des Regelkreises implementiert sind.

5. Diagnoseverfahren zur Überwachung des Betriebs eines Regelkreises (1) mit einer Regelstrecke (3), die ein Ventil als Stellglied aufweist, mit den folgenden Schritten:

    - Abspeichern jeweils einer Folge von Sollwert (w)-, Stellwert (u)- und Istwert (y)-Daten des Regelkreises in einen Datenspeicher (5),
    - Auswählen von zumindest ersten Ausschnitten der Folgen für einen Zeitraum mit einem im Wesentlichen sprungförmigen Verlauf des Sollwerts (w) sowie zweiten Ausschnitten der Folgen für einen Zeitraum mit im Wesentlichen konstantem Sollwert (w),

    **gekennzeichnet durch** die weiteren Schritte,

    - Identifizieren eines linearen Teilmodells (9) für das dynamische Verhalten der Regelstrecke (3) anhand der ersten Ausschnitte und
    - Identifizieren eines nichtlinearen Teilmodells (10) für das Reibungsverhalten der Regelstrecke (3) anhand der zweiten Ausschnitte und anhand des linearen Teilmodells (9), wobei das nichtlineare Teilmodell (10) dem zuvor identifizierten linearen Teilmodell (9) vorgeschaltet ist und
    - Ermitteln, anhand einer Auswertung der Folgen, ob ein Verdacht auf eine erhöhte Haftreibung des Ventils vorliegt, und bei vorliegendem Verdacht auf erhöhte Haftreibung deren quantitative Bestimmung durch Identifikation des nicht linearen Teilmodells (10) durchzuführen.

6. Computerprogramm mit durch einen Computer ausführbaren Programmcodeanweisungen zur Implementierung des Verfahrens nach Anspruch 5, wenn das Computerprogramm auf einem Computer ausgeführt wird.

7. Computerprogrammprodukt, insbesondere Datenträger oder Speichermedium, mit einem durch einen Computer ausführbaren Computerprogramm gemäß Anspruch 6.

**Claims**

1. Diagnostic device for the operation of a control loop (1) having a controlled system (3) comprising a valve as an actuator with a data memory (5) in which in each case a sequence of setpoint (w) data, manipulated variable (u) data and actual value (y) data of the control loop (1) can be stored with an evaluation device (6) for the selection of at least first segments of the sequences for a period with a substantially stepped profile of the setpoint (w) and second segments of the sequences for a period with a substantially constant setpoint (w), **characterised in that** the evaluation device (6) is embodied to use the first segments to identify a linear submodel (9) for the dynamic behaviour of the controlled system (3) comprising a valve and wherein the evaluation device (6) is further embodied to use the second segments and the linear submodel (9) to identify a nonlinear submodel (10) for the friction behaviour of the controlled system (3), wherein the nonlinear submodel (10) is arranged upstream of the previously identified linear submodel (9) and, on the basis of an evaluation of the sequence, to determine whether there is suspected increased static friction of the valve and, if there is suspected increased static friction, to determine this quantitatively by the identification of the nonlinear submodel (10).

2. Diagnostic device according to claim 1, **characterised in that**, to identify the linear submodel (9), the evaluation device (6) is embodied to estimate parameters of a first-order time delay element as a linear submodel.

3. Diagnostic device according to one of the preceding claims, **characterised in that**, to identify the nonlinear submodel (10), the evaluation device (6) is embodied to divide a search space (30), which is enclosed by two parameters (fd, fs) of the nonlinear submodel (10), into a plurality of adjacent subspaces, to determine in each case in the subspaces formed the parameter pair with in each case the best quality of the nonlinear submodel (10) and to use the parameter pairs determined in the subspaces to establish the parameter pair with the best quality in the search space (30).

4. Diagnostic device according to one of the preceding claims, **characterised in that** at least the data memory (5) and the evaluation device (6) are implemented by software on a remote service computer for the remote diagnosis of the control loop.

5. Diagnostic method for monitoring the operation of a control loop (1) having a controlled system (3) comprising a valve as an actuator with the following steps:

    - the storage in each case of a sequence of setpoint (w) data, manipulated variable (u) data and actual value (y) data of the control loop in a data memory (5),
    - the selection of at least first segments of the sequences for a period with a substantially stepped profile of the setpoint (w) and second segments of the sequences for a period with a substantially constant setpoint (w),

**characterised by** the further steps,

- the identification of a linear submodel (9) for the dynamic behaviour of the controlled system (3) with reference to the first segments and
- the identification of a nonlinear submodel (10) for the friction behaviour of the controlled system (3) with reference to the second segments and with reference to the linear submodel (9), wherein the nonlinear submodel (10) is arranged upstream of the previously identified linear submodel (9) and
- the determination, on the basis of an evaluation of the sequences, of whether there is suspected increased static friction of the valve and, if there is suspected increased static friction, to determine this quantitatively by the identification of the nonlinear submodel (10).

**6.** Computer program with computer-executable program-code instructions for the implementation of the method according to claim 5 when the computer program is executed on a computer.

**7.** Computer program product, in particular a data carrier or storage medium with a computer-executable computer program according to claim 6.

**Revendications**

**1.** Dispositif de diagnostic pour contrôler le fonctionnement d'un circuit (1) de régulation, comprenant une section (3) de régulation, qui a une soupape comme organe de réglage, comprenant une mémoire (5) de données, dans laquelle peuvent être mis en mémoire, respectivement, une séquence de données de valeur (w) de consigne, de valeur (u) de réglage et de valeur (y) réelle du circuit (1) de régulation, comprenant un dispositif (6) d'exploitation, pour sélectionner au moins des premières parties des séquences pendant un laps de temps, ayant une variation sensiblement en forme de saut de la valeur (w) de consigne, ainsi que des deuxièmes parties des séquences pendant un laps de temps ayant une valeur (w) de consigne sensiblement constante, **caractérisé en ce que** le dispositif (6) d'exploitation est constitué pour identifier, à l'aide des premières parties, un sous-modèle (9) linéaire du comportement dynamique de la section (3) de régulation, qui a une soupape, et dans lequel le dispositif (6) d'exploitation est constitué, en outre, pour identifier, à l'aide des deuxièmes parties et du sous-modèle (9) linéaire, un sous-modèle (10) non linéaire du comportement de frottement de la section de régulation, le sous-modèle (10) non linéaire étant monté en amont du sous-modèle (9) linéaire identifié auparavant et pour déterminer, à l'aide d'une exploitation des séquences, s'il y a un soupçon d'un frottement statique excessif, dont la détermination quantitative est effectuée par identification du sous-modèle (10) non linéaire.

**2.** Dispositif de diagnostic suivant la revendication 1, **caractérisé en ce que** le dispositif (6) d'exploitation est constitué pour estimer, pour identifier le sous-modèle (9) linéaire, des paramètres d'un élément de temporisation du premier ordre comme sous-modèle linéaire.

**3.** Dispositif de diagnostic suivant l'une des revendications précédentes, **caractérisé en ce que** le dispositif (6) d'exploitation est constitué pour subdiviser, pour identifier le sous-modèle (10) non linéaire, un espace (30) de recherche, déterminé par deux paramètres (fd, fs) du sous-modèle (10) non linéaire, en une pluralité de sous-espaces voisins les uns des autres, pour définir, dans les sous-espaces formés respectivement, la paire de paramètres ayant la qualité la meilleure du sous-modèle (10) non linéaire et pour déterminer, dans l'espace (30) de recherche, à l'aide des paires de paramètres définies dans les sous-espaces, la paire de paramètres ayant la qualité la meilleure.

**4.** Dispositif de diagnostic suivant l'une des revendications précédentes, **caractérisé en ce qu'**au moins la mémoire (5) de données et le dispositif (6) d'exploitation sont mis en oeuvre par logiciel sur un ordinateur Remote Service, pour le diagnostic à distance du circuit de régulation.

**5.** Procédé de diagnostic pour contrôler le fonctionnement d'un circuit (1) de régulation, comprenant une section (3) de régulation, qui a une soupape comme organe de réglage, comprenant les stades suivants :

- mise en mémoire respectivement d'une séquence de données de valeur (w) de consigne, de valeur (u) de réglage et de valeur (y) réelle du circuit de régulation dans une mémoire (5) de données,
- sélection d'au moins des premières parties des séquences pendant un laps de temps, ayant une variation sensiblement à saut de la valeur (w) de consigne, ainsi que de deuxièmes parties des séquences pendant un laps de temps, ayant une valeur (w) de consigne sensiblement constante,

**caractérisé par** les autres stades,

- identification d'un sous-modèle (9) linéaire du comportement dynamique de la section (3) de régulation à l'aide des premières parties et

- identification d'un sous-modèle (10) non linéaire du comportement de frottement de la section (3) de régulation à l'aide des deuxièmes parties et à l'aide du sous-modèle (9) linéaire, le sous-modèle (10) non linéaire étant monté en amont du sous-modèle (9) linéaire identifié auparavant et

- détermination, à l'aide d'une exploitation des séquences, s'il existe un soupçon d'un frottement dynamique excessif de la soupape et, en présence de ce soupçon d'un frottement dynamique excessif, on effectue sa détermination quantitative par identification du sous-modèle (10) linéaire.

6. Programme d'ordinateur, comprenant des instructions de code de programme pouvant être exécutées par un ordinateur pour la mise en oeuvre du procédé suivant la revendication 5, lorsque le programme d'ordinateur est réalisé sur un ordinateur.

7. Produit de programme d'ordinateur, notamment support de données ou support de mémoire, comprenant un programme d'ordinateur suivant la revendication 6, pouvant être réalisé par un ordinateur.

FIG 1

FIG 2

## FIG 3

## FIG 4

## FIG 5

## FIG 6

**IN DER BESCHREIBUNG AUFGEFÜHRTE DOKUMENTE**

**In der Beschreibung aufgeführte Patentdokumente**

- EP 1528447 B1